# EUROPEAN PATENT SPECIFICATION

(11) **EP 3 933 341 B1**
(45) Date of publication and mention of the grant of the patent: **22.05.2024**
(21) Application number: 20762912.2
(22) Date of filing: 05.02.2020
(51) Int. Cl.: G01C 3/06, G08G 1/16, G06T 7/593, G01C 3/14, G01C 3/08

(54) **COMPUTATION DEVICE AND PARALLAX CALCULATION METHOD**
BERECHNUNGSVORRICHTUNG UND PARALLAXENBERECHNUNGSVERFAHREN
DISPOSITIF DE CALCUL ET PROCÉDÉ DE CALCUL DE PARALLAXE

(30) Priority: 28.02.2019 JP 2019036151
(43) Date of publication of application: 05.01.2022
(73) Proprietor: Hitachi Astemo, Ltd., Hitachinaka-shi Ibaraki 312-8503 (JP)
(72) Inventor: INATA, Keisuke, Tokyo 100-8280 (JP); UCHIDA, Yusuke, Tokyo 100-8280 (JP); NONAKA, Shinichi, Hitachinaka-shi Ibaraki 312-8503 (JP); TAKADA, Masashi, Hitachinaka-shi, Ibaraki 312-8503 (JP)
(74) Representative: MERH-IP Matias Erny Reichl Hoffmann Patentanwälte PartG mbB
(86) International application number: PCT/JP2020/004342
(87) International publication number: WO 2020/175063

(56) References cited:
- JP-A- 2011 013 064
- TW-B- I 637 350
- Jong-Il Park ET AL: "Hierarchical depth mapping from multiple cameras" In: "Advances in Databases and Information Systems", 1 January 1997 (1997-01-01), Springer International Publishing, Cham 032682, XP055619629, ISBN: 978-3-319-10403-4 vol. 1310, pages 685-692, DOI: 10.1007/3-540-63507-6_261, * Abstract, chapters 1, 3.1-3.3, fig. 3 *
- NISHIHARA H K.: "PRISM: A Practical Mealtime Imaging Stereo Matcher", SPIE SMART STRUCTURES AND MATERIALS + NONDESTRUCTIVE EVALUATION AND HEALTH MONITORING, 2005, SAN DIEGO, CALIFORNIA, UNITED STATES, vol. 0449, 6 February 1984 (1984-02-06), pages 134-142, XP055970369, US ISSN: 0277-786X, DOI: 10.1117/12.939233 ISBN: 978-1-5106-4548-6
- KEVIN TATE ET AL: "DEPTH MAP CONSTRUCTION RANGE-GUIDED MULTIRESOLUTION STEREO MARCHING", IEEE TRANSACTIONS ON SYSTEMS, MAN AND CYBERNETICS, IEEE INC. NEW YORK, US, vol. 24, no. 1, 1 January 1994 (1994-01-01), pages 134-144, XP000433142, ISSN: 0018-9472, DOI: 10.1109/21.259694
- CHANG QIONG ET AL: "Real-Time Stereo Vision System: A Multi-Block Matching on GPU", IEEE ACCESS, vol. 6, 25 July 2018 (2018-07-25), pages 42030-42046, XP011691698, DOI: 10.1109/ACCESS.2018.2859445 [retrieved on 2018-08-17]
- ZHANG KANG ET AL: "Insights into local stereo matching: Evaluation of disparity refinement approaches", 2014 IEEE INTERNATIONAL CONFERENCE ON INFORMATION AND AUTOMATION (ICIA), IEEE, 28 July 2014 (2014-07-28), pages 1195-1200, XP032667882, DOI: 10.1109/ICINFA.2014.6932831 [retrieved on 2014-10-21]
- MARAPANE S B ET AL: "MULTI-PRIMITIVE HIERARCHICAL (MPH) STEREO ANALYSIS", IEEE TRANSACTIONS ON PATTERN ANALYSIS AND MACHINE INTELLIGENCE, IEEE COMPUTER SOCIETY, USA, vol. 16, no. 3, 1 March 1994 (1994-03-01), pages 227-240, XP000440368, ISSN: 0162-8828, DOI: 10.1109/34.276122

## Description

### Technical Field

The present invention relates to an arithmetic device and a parallax calculation method.

### Background Art

A position measurement device that measures a distance to an object present in a camera field of view using a stereo image captured by a stereo camera having a pair of cameras on the basis of the principle of triangulation is known. PTL 1 discloses a correlation calculation method in an image that captures an image of an object by a plurality of imaging devices, cuts out a plurality of small region images from one of obtained images and uses the small region image as a collation region, and detects distance distribution from the imaging device to the object or a plane direction of a plane forming the object by correlation calculation between each of the collation regions and the other image. The correlation calculation method in an image includes a multi-resolution image generating means that generates a plurality of images having different resolutions with respect to a plurality of the images and forms an image in a hierarchical structure for each of the resolutions. When N and M are integers, each parallax with respect to each of the collation regions is obtained by correlation calculation between N layers, a collation region with respect to correlation calculation of M layers and its search region are determined on the basis of each of the parallax, and correlation calculation is performed in each of the determined collation regions and search regions, so that distance distribution to the object or a plane direction of a plane forming the object is detected.

Jong Il Park ET AL: "Hierarchical depth mapping from multiple cameras" In: "Advances in Databases and Information Systems", 1 January 1997 (1997-01-01), Springer International Publishing, discloses a method to estimate a dense and sharp depth map using multiple cameras. A key issue in obtaining a sharp depth map is how to overcome the harmful influence of occlusion. They propose an occlusion-overcoming strategy which selectively uses the depth information from multiple cameras. With a simple sort and discard technique, they resolve the occlusion problem considerably at a slight sacrifice of noise tolerance. Another key issue in area-based stereo matching is the size of the matching window. They propose a hierarchical scheme that attempts to acquire a sharp depth map such that edges of the depth map coincide with object boundaries on the one hand, reduce noisy estimates due to insufficient size of the matching window on the other hand.

### Citation List

### Patent Literature

PTL 1: JP 2001-319229 A

### Summary of Invention

### Technical Problem

In the invention described in PTL 1, there is room for improving accuracy.

### Solution to Problem

The solution is provided by the features of the independent claims. Variations are as described by the dependent claims.

### Advantageous Effects of Invention

According to the present invention, accuracy of a calculated distance can be improved.

### Brief Description of Drawings

[FIG. 1] FIG. 1 is a hardware configuration diagram of a vehicle 9.
[FIG. 2] FIG. 2 is a diagram for explaining comparison between a left image 21, a right image 31, a coarse distance image 41, and a detailed distance image 46.
[FIG. 3] FIG. 3 is a functional block diagram of an arithmetic device 1.
[FIG. 4] FIG. 4 is a diagram for explaining a relationship between a parent block and a child block.
[FIG. 5] FIG. 5 is a diagram for explaining operation of a candidate calculation unit 106.
[FIG. 6] FIG. 6 is a conceptual diagram explaining determination of a parallax by a first parallax search unit 103A.
[FIG. 7] FIG. 7 is a flowchart showing operation of the arithmetic device 1 in a first embodiment.
[FIG. 8] FIG. 8 is a functional block diagram of the arithmetic device 1 in a modification 1.
[FIG. 9] FIG. 9 is a flowchart showing operation of the arithmetic device 1 in a modification 3.
[FIG. 10] FIG. 10 is a diagram illustrating a variation of a search condition.
[FIG. 11] FIG. 11 is a diagram for explaining operation of the first parallax search unit 103A in a modification 7.
[FIG. 12] FIG. 12 is a conceptual diagram illustrating an output of the first parallax search unit 103A in a modification 8.
[FIG. 13] FIG. 13 is a conceptual diagram illustrating a timing for outputting the detailed distance image 46 in a modification 10.
[FIG. 14] FIG. 14 is a functional block diagram of an arithmetic device 1A in a second embodiment.
[FIG. 15] FIG. 15 is a flowchart showing processing of the arithmetic device 1A in the second embodiment.
[FIG. 16] FIG. 16 is a functional block diagram of the arithmetic device 1A in a modification 2 of the second embodiment.

### Description of Embodiments

### -First Embodiment-

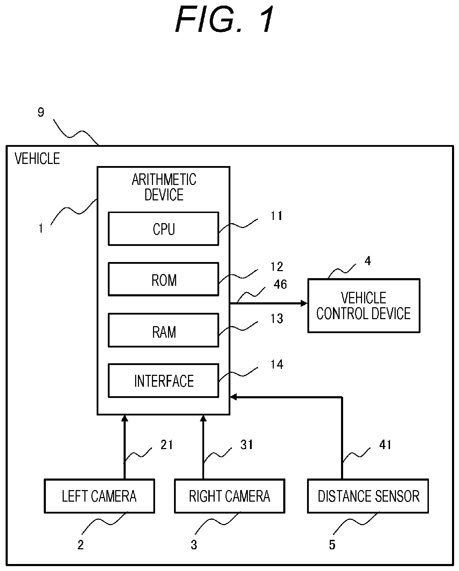

Hereinafter, a first embodiment of an arithmetic device according to the present invention will be described with reference to FIGS. 1 to 5.

### (Hardware configuration)

FIG. 1 is a hardware configuration diagram of a vehicle 9 on which an arithmetic device 1 according to the present invention is mounted. The vehicle 9 includes the arithmetic device 1, a left camera 2, a right camera 3, a vehicle control device 4, and a distance sensor 5. The arithmetic device 1 and the vehicle control device 4 are electronic control units. The left camera 2 and the right camera 3 output a captured image obtained by capturing the surroundings of the vehicle 9 to the arithmetic device 1. The left camera 2 and the right camera 3 are arranged side by side in the horizontal direction. Hereinafter, an image captured by the left camera 2 is referred to as a left image 21, and an image captured by the right camera 3 is referred to as a right image 31. The left camera 2 may be referred to as a "first camera", and the right camera 3 may be referred to as a "second camera".

Since the left camera 2 and the right camera 3 are arranged so as to face the horizontal direction, both the left image 21 and the right image 31 are images obtained by capturing a three-dimensional space spreading in the vertical direction and the horizontal direction. However, the terms "horizontal" and "vertical" as used here do not have a strict meaning, and mean that the left and right direction of the left image 21 and the right image 31 correspond to the left and right direction, not the top and bottom direction. For example, the left camera 2 and the right camera 3 may be inclined by about 30 degrees at the maximum with an optical axis as the rotation center.

The distance sensor 5 is a sensor that can acquire distance information, and is, for example, a laser range finder, an ultrasonic sensor, light detection and ranging (LiDAR), or the like. The distance sensor 5 faces the same direction as the left camera 2 and the right camera 3. The distance sensor 5 generates a coarse distance image 41 and outputs the coarse distance image 41 to the arithmetic device 1. Note that the coarse distance image 41 is a name for convenience, and may actually be a list of distance information described according to a predetermined rule. The predetermined rule is, for example, a rule described in the order obtained by repeating scanning in the right direction by 5 degrees from the upper left, moving in the lower direction by 10 degrees when scanning is performed by 120 degrees, and scanning is performed again by 5 degrees from the left.

Three-dimensional spaces recorded in the left image 21, the right image 31, and the coarse distance image 41 only need to overlap at least partially. Mounting positions and mounting postures of the left camera 2, the right camera 3, and the distance sensor 5 in the vehicle 9 are known, and a mutual positional relationship between the left image 21, the right image 31, and the coarse distance image 41 is also known. For this reason, it is also known which position of the coarse distance image 41 the position of a predetermined pixel in a three-dimensional space in the left image 21 corresponds to. The mutual positional relationship between the left image 21, the right image 31, and the coarse distance image 41 may be obtained by calculation or may be obtained by referring to a lookup table or the like prepared in advance.

Since relative positions of the left camera 2 and the right camera 3 are known and internal parameters of the two cameras are also known, a relationship between a distance to the camera of a subject and parallax is also known. In the present embodiment, the relationship between the distance and a parallax is stored in the arithmetic device 1 as a parallax table 121 to be described later. Since the relationship between the distance and the parallax is known in the present embodiment, the parallax can also be referred to as "information corresponding to the distance". Further, in the present embodiment, the distance and the parallax can easily be converted into each other, so that the distance and the parallax can be regarded as substantially identical information.

The arithmetic device 1 includes a CPU 11 that is a central processing unit, a ROM 12 that is a read-only storage device, a RAM 13 that is a readable/writable storage device, and an interface 14. The CPU 11 loads a program stored in the ROM 12 into the RAM 13 and executes the program to realize a plurality of functions to be described later. However, the arithmetic device 1 may be realized by a field programmable gate array (FPGA) that is a rewritable logic circuit or an application specific integrated circuit (ASIC) that is an integrated circuit for a specific use, instead of a combination of the CPU 11, the ROM 12, and the RAM 13. Further, the arithmetic device 1 may be realized by a combination of different configurations, for example, a combination of the CPU 11, the ROM 12, the RAM 13, and the FPGA instead of a combination of the CPU 11, the ROM 12, and the RAM 13.

The interface 14 receives the left image 21, the right image 31, and the coarse distance image 41 and provides them to the CPU 11. However, since only a small amount of information can be stored in a register included in the CPU 11, the interface 14 stores the received left image 21, right image 31, and coarse distance image 41 in the RAM 13 so that the CPU 11 can freely refer to these pieces of information.

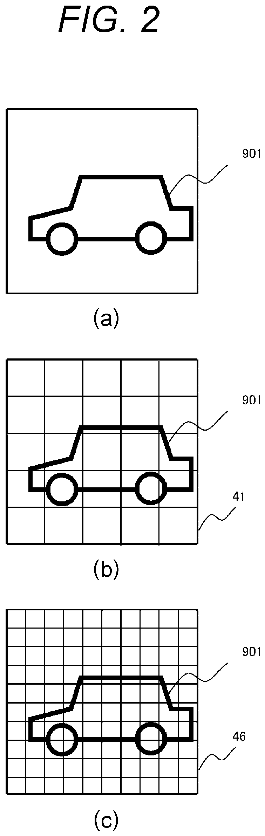

The arithmetic device 1 creates a detailed distance image 46 using the input left image 21, right image 31, and coarse distance image 41, and outputs the detailed distance image 46 to the vehicle control device 4. A process in which the arithmetic device 1 creates the detailed distance image 46 will be described later in detail with reference to FIG. 2 and subsequent drawings. In the coarse distance image 41 and the detailed distance image 46, degree of distance on a two-dimensional plane is represented by color shading or color saturation. Formats of the coarse distance image 41 and the detailed distance image 46 may be the same or different. In the present embodiment, in order to simplify the description, both the coarse distance image 41 and the detailed distance image 46 will be described on the assumption that an integer value of "0" to "255" representing the degree of distance is stored in each pixel.

A range shown in the detailed distance image 46 is substantially the same as those in the left image 21 and the right image 31. However, a range shown in the detailed distance image 46 may be smaller than a range shown in the left image 21 and the right image 31. The number of pixels of the detailed distance image 46 may be substantially the same as that of the left image 21 and the right image 31, or may be about a fraction of that of the left image 21 and the right image 31.

The vehicle control device 4 controls the vehicle 9 using the detailed distance image 46 input from the arithmetic device 1. For example, the vehicle control device 4 detects an obstacle present around the vehicle 9 from the detailed distance image 46, and controls the vehicle 9 so as to avoid a collision between the vehicle 9 and the detected obstacle. Control of the vehicle 9 by the vehicle control device 4 is realized, for example, by the vehicle control device 4 outputting an operation command to a steering device (not illustrated) and a braking device (not illustrated).

### (Image)

FIG. 2 is a diagram explaining comparison of resolutions of information stored in the left image 21, the right image 31, the coarse distance image 41, and the detailed distance image 46. However, the resolution here does not mean a distance in the depth direction, but means a level of resolution in the up and down direction or the left and right direction on the image.

FIG. 2(a) is a diagram illustrating a state around the vehicle 9, and a vehicle 901 is present. FIG. 2(b) is a conceptual diagram illustrating the resolution of the coarse distance image 41, and FIG. 2(c) is a conceptual diagram illustrating the resolution of the detailed distance image 46. The coarse distance image 41 illustrated in FIG. 2(b) stores distance information for each of a total of 25 regions obtained by dividing each of vertical and lateral sides of the region illustrated in FIG. 2(a) by five. The detailed distance image 46 illustrated in FIG. 2 (c) stores distance information for each of a total of 100 regions obtained by dividing vertical and lateral sides of the region illustrated in FIG. 2(a) by ten. In the coarse distance image 41 and the detailed distance image 46, the upper and lower direction in the illustration corresponds to the top and bottom direction and the left and right direction in the illustration corresponds to the horizontal direction.

In the present embodiment, a region indicated by one piece of distance information included in the coarse distance image 41 as illustrated in FIG. 2 (b) is referred to as a "first block", and a region indicated by one piece of distance information included in the detailed distance image 46 as illustrated in FIG. 2(c) is referred to as a "second block". The first block is larger than the second block. In the example illustrated in FIG. 2 and the present embodiment, the first block has a width and a height that are twice and an area that is four times as large as those of the second block. However, the first block only needs to be larger than the second block, and the multiple is not particularly limited.

Note that distance information of one point output from the distance sensor 5 is not necessarily distance information obtained by measuring the entire first block. However, in the present embodiment, the distance information is regarded as distance information representing the entire first block for convenience. Further, it is known that, in which region of the first block in the coarse distance image 41 each of the second blocks in the detailed distance image 46 is included.

Each of the left image 21 and the right image 31 has information on luminance and saturation with a resolution equal to or higher than that of the second block. In the example of FIG. 2, each of the left image 21 and the right image 31 has information of at least 10 pixels in both the vertical and lateral directions with respect to the range illustrated in FIG. 2(a), that is, 100 pixels or more in total. The left image 21 and the right image 31 may have substantially the same number of pixels as that of the detailed distance image 46, or may have pixels twice or 10 times as large in the longitudinal direction and the lateral direction. In the present embodiment, the left image 21 and the right image 31 have substantially the same number of pixels as the detailed distance image 46.

### (Functional block)

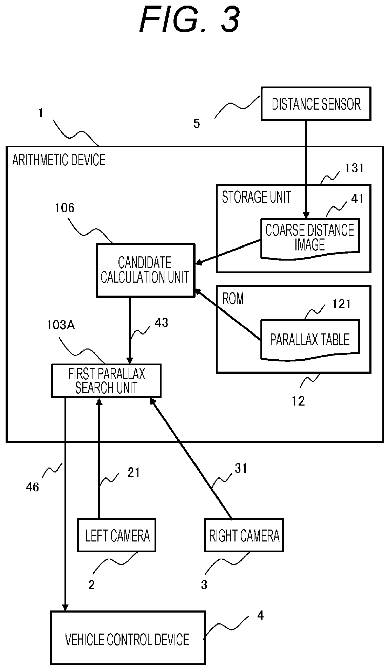

FIG. 3 is a functional block diagram illustrating a function of the arithmetic device 1 as a functional block. However, FIG. 3 also illustrates information stored in a storage unit 131 and the ROM 12 for convenience of description. The arithmetic device 1 includes a first parallax search unit 103A, a candidate calculation unit 106, and the storage unit 131 as its functions. The storage unit 131 is realized by, for example, the RAM 13. The coarse distance image 41 input from the distance sensor 5 is stored in the storage unit 131. The coarse distance image 41 is overwritten each time a new one of the coarse distance image 41 is input from the distance sensor 5. Note that, strictly speaking, the left image 21 and the right image 31 are also input to the storage unit 131 which is a RAM. However, illustration of these is omitted in FIG. 3.

The parallax table 121 stored in the ROM 12 is a table indicating a relationship between parallax and a distance for the left camera 2 and the right camera 3. To make sure, a relationship between a parallax and a distance is affected by relative positions and an internal parameter of the two cameras . The parallax table 121 stored in the ROM 12 is created in advance in accordance with a positional relationship between and an internal parameter of the left camera 2 and the right camera 3 in the present embodiment.

The left image 21 and the right image 31 are input to the first parallax search unit 103A. First, the first parallax search unit 103A sets one of the left image 21 and the right image 31 as a standard image and the other as a reference image. The first parallax search unit 103A may select either the left image 21 or the right image 31 as the standard image. However, this selection is made consistent in the present embodiment. The first parallax search unit 103A processes the standard image for each of the second blocks, and searches a region of the reference image corresponding to each of the second blocks for the entire region of the standard image. The first parallax search unit 103A does not search all the regions on the epipolar line in the reference image, but searches only a specific region of the reference image based on an all-region parallax candidate 43.

A known method is used for the search by the first parallax search unit 103A. For example, the first parallax search unit 103A calculates dissimilarity by sum of absolute differences (SAD) for a search range, and searches a region on the reference image having a smallest dissimilarity. The first parallax search unit 103A may use any of zero-mean sum of absolute differences (ZSAD), zero-mean sum of squared differences (ZSSD), block matching (BM), semi global matching (SGM), normalized cross correlation (NCC), and zero-mean normalized cross correlation (ZNCC) instead of SAD.

For example, the first parallax search unit 103A divides the standard image into the sizes of the second blocks, searches for a corresponding region in the reference image for a region determined based on the all-region parallax candidate 43 for a first second block, and determines parallax of the second block. Then, next, for a second block of the standard image, the first parallax search unit 103A searches for a corresponding region in the reference image for a region determined based on the all-region parallax candidate 43, and determines a parallax of the second block. As described above, the first parallax search unit 103A divides the standard image into the sizes of the second blocks, calculates a parallax of each of the blocks, and creates the detailed distance image 46. Operation of the search by the first parallax search unit 103A using the all-region parallax candidate 43 will be described later.

The candidate calculation unit 106 executes two pieces of processing described below. As first processing, the candidate calculation unit 106 reads the coarse distance image 41 and the parallax table 121, and converts distance information for each first block in the coarse distance image 41 into a parallax of the left camera 2 and the right camera 3. As second processing, based on a predetermined search condition, the candidate calculation unit 106 creates a parallax candidate 43a for each of the regions divided into the sizes of the second blocks of the standard image, and outputs the parallax candidates 43a for all the blocks to the first parallax search unit 103A as the all-region parallax candidate 43. That is, the all-region parallax candidate 43 includes the same number of the parallax candidates 43a as the number of regions obtained by dividing the standard image into the sizes of the second blocks. The search condition in the present embodiment is "a parent block and a block adjacent to the parent block in the horizontal direction". Creation of the parallax candidate 43a and the all-region parallax candidate 43 will be described later . The search condition is determined in advance by, for example, a designer, and is hard-coded into a program stored in the ROM 12.

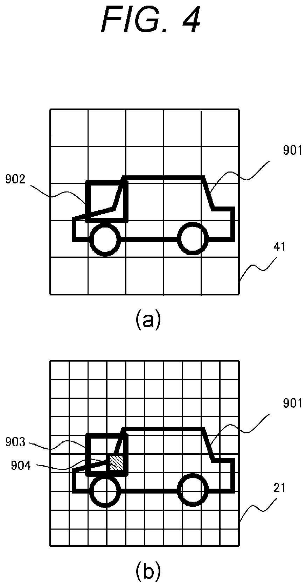

FIG. 4 is a diagram illustrating a relationship between a parent block and a child block. FIG. 4(a) is a conceptual diagram of the coarse distance image 41, which is the same as FIG. 2 (b) . FIG. 4 (b) is a conceptual diagram of the left image 21 and is illustrated identically as FIG. 2 (c), since the left image 21 and the detailed distance image 46 have substantially the same number of pixels in the present embodiment. A region 902 which is one of the first blocks in the coarse distance image 41 illustrated in FIG. 4(a) corresponds to a region 903 in the left image 21 illustrated in FIG. 4(b). A region 904 that is one of the second blocks illustrated in FIG. 4 (b) is included in the region 903.

In the case of such a relationship, in the present embodiment, a relationship of the region 902 and the region 904 is referred to as a relationship of a "parent block" and a "child block". Specifically, a child block of the region 902 is the region 904, and a parent block of the region 904 is the region 902.

### (Operation of candidate calculation unit 106)

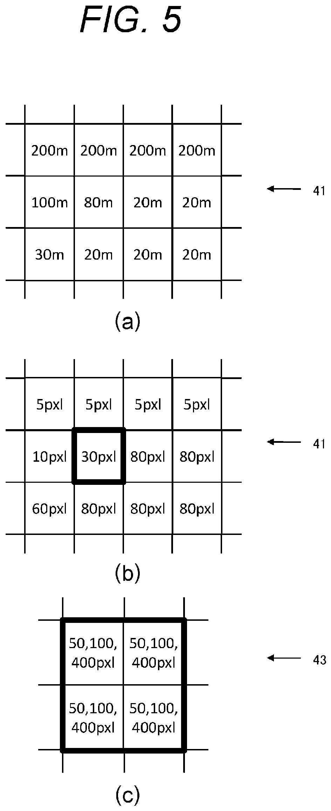

FIG. 5 is a diagram for explaining operation of the candidate calculation unit 106. FIGS. 5(a) and 5(b) are conceptual diagrams of the coarse distance image 41, and FIG. 5(c) is a conceptual diagram of the all-region parallax candidate 43. Strictly speaking, FIG. 5(c) illustrates a reference value of the parallax candidate 43a of a block in a region of the second block constituting the left image 21. However, all of FIGS. 5(a) to 5(c) illustrate only a part of the coarse distance image 41 and the all-region parallax candidate 43. Further, a square frame in FIGS. 5(a) and 5(b) represents the first block, and a square frame in FIG. 5(c) represents the second block. Note that thick line frames in FIGS. 5(b) and 5(c) correspond to each other, and the second block indicated by the square frame in FIG. 5(b) and four of the small second blocks included in the square frame in FIG. 5(c) have a relationship of a parent block and a child block.

However, strictly speaking, each element of the all-region parallax candidate 43, that is, each of the parallax candidates 43a does not have the size of the second block, and a target using each of the parallax candidates 43a has the size of the second block. For this reason, strictly speaking, the description that "FIGS. 5(b) and 5(c) are in the relationship of a parent block and a child block" is not correct. However, such an expression is used to indicate the correspondence.

The coarse distance image 41 illustrated in FIG. 5(a) indicates distance information for each of the first blocks. Output of the distance sensor 5 is not limited to be described in units of meters, and may be, for example, described in a code corresponding to a distance. However, in the example shown in FIG. 5 (a), the output is generalized and described in units of meters. In FIG. 5(b), the candidate calculation unit 106 converts the distance information of the coarse distance image 41 into a parallax, that is, the number of pixels using the parallax table 121. However, in FIG. 5 (b), "pixel" is denoted as "pxl" for convenience of drawing.

The candidate calculation unit 106 creates the information illustrated in FIG. 5(b) using the information in FIG. 5(a) and the parallax table 121 as the first processing. For example, the candidate calculation unit 106 replaces "200 m" with "5 pixels" and replaces "80 m" with "30 pixels". As the second processing, the candidate calculation unit 106 creates the information illustrated in FIG. 5(c) using the information illustrated in FIG. 5(b) according to the search condition. As described above, the search condition in the present embodiment is a parent block and a block adjacent to the parent block in the horizontal direction.

The candidate calculation unit 106 sets the reference value of a parallax of the second block as a processing target as a parallax of a parent block and a parallax of the first block adjacent to the parent block in the horizontal direction in a three-dimensional space. Briefly, the reference value of parallax of a certain second block is a parallax of a parent block, a parallax of a block to the right of the parent block, and a parallax of a block to the left of the parent block. Then, the candidate calculation unit 106 sets a predetermined range, for example, plus or minus 20 pixels, from the reference value of the parallax candidate 43a as the parallax candidate 43a.

In the present embodiment, as shown in FIG. 5(c), if the parent blocks are the same, the reference values of the parallax candidates 43a of the child blocks are the same. For this reason, for child blocks having the same parent block, the parallax candidate 43a only needs to be created and recorded for any one of the child blocks.

### (Operation of first parallax search unit 103A)

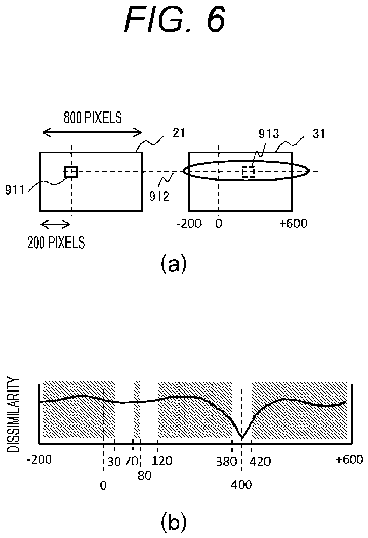

FIG. 6 is a conceptual diagram illustrating determination of a parallax by the first parallax search unit 103A. FIG. 6 (a) illustrates the left image 21 and the right image 31. In this example, a region of the reference image corresponding to a region 911 of the left image 21, which is the standard image, that is, a region of the right image 31 is searched. In the present embodiment, since the left camera 2 and the right camera 3 are installed side by side in the horizontal direction, an epipolar line is a broken line indicated by a reference numeral 912 extending in the horizontal direction. In a case where a width in the lateral direction in the drawing of the left image 21 and the right image 31 is 800 pixels and the center of the region 911 is 200 pixels from the left end, numerical values of -200 to +600 are assigned to the right image 31 as the reference image as illustrated in the drawing. For example, in a case where the region 903 around 600 pixels from the left of the reference image corresponds to the region 901 of the standard image, that is, the dissimilarity is determined to be the lowest, a parallax is calculated as "400".

FIG. 6(b) is a diagram illustrating an example of dissimilarity with the region 911 for each position on the broken line 912 of the reference image. As described above, SAD or the like is used to calculate dissimilarity. Note that, in FIG. 6 (b), dissimilarity is shown over the entire region from -200 to +600. However, in the present embodiment, dissimilarity needs to be calculated only for the parallax candidate 43a in a region as a processing target included in the all-region parallax candidate 43. According to the example illustrated in FIG. 5(c), since the reference values of the parallax candidate 43a are 50, 100, and 400, the parallax candidates 43a are plus or minus 20 pixels around each of the reference values, that is, 30 to 70, 80 to 120, and 380 to 420.

For this reason, the first parallax search unit 103A does not need to calculate dissimilarity in a hatched region illustrated in FIG. 6(b), and only needs to calculate dissimilarity only for the ranges where the parallaxes are 30 to 70, 80 to 120, and 380 to 420. In the example illustrated in FIG. 6(b), since a minimum peak among 30 to 70, 80 to 120, and 380 to 420 which are the parallax candidates 43a is "400", the parallax is calculated as "400".

### (Flowchart)

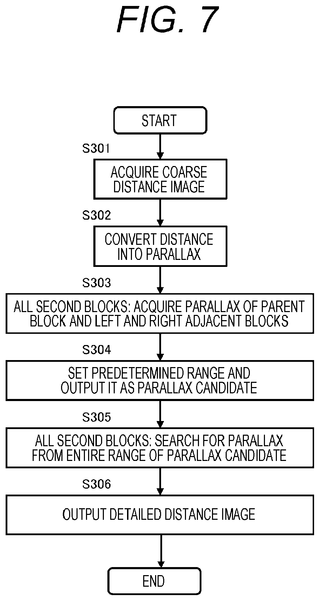

FIG. 7 is a flowchart showing operation of the arithmetic device 1 in the first embodiment. An execution subject of each step described below is the CPU 11 of the arithmetic device 1. In Step S301, the candidate calculation unit 106 acquires the coarse distance image 41 from the storage unit 131. In subsequent Step S302, the candidate calculation unit 106 reads the parallax table 121 from the ROM 12, and converts a distance stored in the coarse distance image 41 into a parallax. In subsequent Step S303, the candidate calculation unit 106 sets all the second blocks of the left image 21 as processing targets, and acquires a parallax from a parent block and blocks adjacent to the left and right sides of the parent block in the coarse distance image 41. Note that this parallax is treated as a reference value of the parallax candidate 43a.

In subsequent Step S304, the candidate calculation unit 106 sets a predetermined range, for example, plus or minus 20 pixels, with respect to the parallax acquired in Step S303 to create the parallax candidate 43a of each block, and collectively outputs the parallax candidates 43a of all the blocks as the all-region parallax candidate 43. In subsequent Step S305, the first parallax search unit 103A sets all the second blocks of the left image 21 as processing targets, calculates dissimilarity for the entire range of the parallax candidate 43a for each block, and searches for a parallax. In subsequent Step S306, the first parallax search unit 103A generates and outputs the detailed distance image 46 using the parallax searched for in Step S305, and ends the processing shown in FIG. 7.

According to the first embodiment described above, an action and an effect below can be obtained.
(1) The arithmetic device 1 includes the storage unit 131 that stores the coarse distance image 41 indicating a parallax of a two-dimensional plane in units of the first blocks, the first parallax search unit 103A that uses the left image 21, that is, the standard image that is an image captured by the first camera, that is, the left camera 2, and the right image 31, that is the reference image that is an image captured by the second camera, that is, the right camera 3, to calculate, in units of the second blocks having a size equal to or smaller than that of the first block, a parallax in the standard image based on the parallax candidate 43a that is a candidate for a parallax for each of the second blocks, and generate the detailed distance image 46 that is a distance image in detail, and the candidate calculation unit 106 that calculates the parallax candidate 43a based on a parallax of a parent block that is a region having a size of the first block including the second block for which the first parallax search unit 103A calculates a parallax, a parallax of an adjacent block that is a region having the size of the first block adjacent to the parent block, and the search condition. For this reason, the parallax candidate 43a is determined using a parallax of not only the parent block but also a block adjacent to the parent block, so that accuracy of a calculated distance can be improved. This advantage will be described in detail.
   In a parent block including a contour of an object such as the region 902 in FIG. 4(b), a parallax of a plurality of child blocks is different. Accordingly, when a parallax is calculated using only parallax of one parent block, it is inevitable that the accuracy is lowered. If a parallax of a child block is searched for using only a parallax of one parent block, an optimum parallax cannot be searched for and becomes a value close to the parallax of the parent block. Note that it is also possible to search all regions on an epipolar line without limiting the range. However, in this case, a problem that a calculation amount increases and a problem that a completely different parallax is selected may occur. In contrast, in the present embodiment, since a parallax of a block adjacent to a parent block is also used, an appropriate range can be searched, a calculation amount is smaller than that when a full search is performed, and accuracy can be improved as compared with the case where a parallax of only a parent block is used or the case where a full search is performed.
(2) The arithmetic device 1 includes the interface 14 that receives the coarse distance image 41 and stores the coarse distance image 41 in the storage unit 131. For this reason, since the arithmetic device 1 can easily acquire the coarse distance image 41 without calculation, the calculation amount can be reduced.
(3) The candidate calculation unit 106 searches for the parallax candidate 43a using a parallax set for the parent block and the adjacent block in the coarse distance image 41. Specifically, the candidate calculation unit 106 reads a value of a parallax of the parent block and the adjacent block from the coarse distance image 41 to use the value as the reference value of the parallax candidate 43a, sets the reference value with a predetermined range as the parallax candidate 43a, and searches the entire region. For this reason, a more probable parallax can be calculated.
(4) Both the standard image and the reference image are images obtained by capturing a three-dimensional space spreading in the vertical direction and the horizontal direction. The candidate calculation unit 106 sets the first block existing in the horizontal direction of the parent block in the three-dimensional space as an adjacent block. For example, in an application for an automobile, distance accuracy in the horizontal direction tends to be required rather than distance accuracy in the vertical direction, and the calculation amount of the first parallax search unit 103A increases as the number of candidates to be referred to by the candidate calculation unit 106 increases. For this reason, by limiting the position of the parent block to be referred to the horizontal direction for which there is a strong demand for ensuring accuracy, the calculation amount can be reduced while a required system is satisfied.

### (Modification 1)

In the first embodiment described above, the coarse distance image 41 is output by the distance sensor 5. However, the arithmetic device 1 may include a second parallax search unit that generates the coarse distance image 41. In this case, the vehicle 9 does not need to include the distance sensor 5.

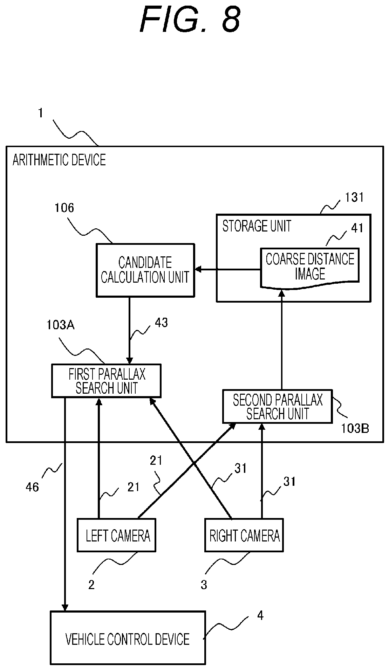

FIG. 8 is a functional block diagram of the arithmetic device 1 in a modification 1. In the functional block diagram shown in FIG. 8, a second parallax search unit 103B is added as compared with FIG. 3. Operation of the first parallax search unit 103A is similar to that of the first embodiment. The candidate calculation unit 106 does not need to perform the first processing of converting a distance into a parallax. The left image 21 and the right image 31 are input to the second parallax search unit 103B. The second parallax search unit 103B generates the coarse distance image 41 and stores the coarse distance image 41 in the storage unit 131.

Operation of the second parallax search unit 103B will be described in detail below. First, the second parallax search unit 103B uses the left image 21 as the standard image and the right image 31 as the reference image, and identifies a region of the reference image corresponding to each region of the standard image in units of the first blocks and calculates parallax. Then, the second parallax search unit 103B outputs the calculated parallax of each of the first blocks as the coarse distance image 41 without conversion. The calculation of parallax by the second parallax search unit 103B is as described below.

In order to calculate parallax, the second parallax search unit 103B calculates dissimilarity for all the first blocks on an epipolar line in the reference image, and searches for a block having smallest dissimilarity. Then, the second parallax search unit 103B sets a difference between coordinates on the standard image of the block of the standard image of the processing target and coordinates on the reference image of the block having smallest dissimilarity as parallax. Note that any of SAD, ZSAD, ZSSD, BM, SGM, NCC, and ZNCC may be used for calculation of dissimilarity by the second parallax search unit 103B.

A difference between the operation of the first parallax search unit 103A and the second parallax search unit 103B is the size of the block as a processing target and whether or not the search target is limited. The processing target of the first parallax search unit 103A is the second block, and the processing target of the second parallax search unit 103B is the first block. When calculating parallax of a processing target, the first parallax search unit 103A searches for parallax only in a range on an epipolar line and indicated by the parallax candidate 43a. The second parallax search unit 103B searches all the regions on an epipolar line without particularly limiting a search range. However, the second parallax search unit 103B may uniformly limit the search range, and for example, only a range of 60% instead of the entire region in the horizontal direction, specifically, a range of 480 pixels that is 60% of 800 pixels around the position where parallax is zero may be set as the search range.

According to the modification 1, an action and an effect described below can be obtained.

(5) The arithmetic device 1 includes a second parallax search unit 103B that creates the coarse distance image 41 using the standard image and the reference image and stores the coarse distance image 41 in the storage unit 131. For this reason, the detailed distance image 46 can be created even if the vehicle 9 does not include the distance sensor 5.

Note that, in the modification 1, the first parallax search unit 103A and the second parallax search unit 103B may be implemented using a common program component or hardware circuit.

### (Modification 2)

In the first embodiment described above, the first block is larger than the second block. However, the first block and the second block may have the same size. That is, in this case, parallax of a block to be a processing target, that is, information on a distance, is calculated again using parallax of a surrounding block. For this reason, the distance information stored in the detailed distance image 46 has an advantage that accuracy is higher than that of the distance information stored in the coarse distance image 41, and certain usefulness is recognized.

### (Modification 3)

In the first embodiment described above, the candidate calculation unit 106 uses all parallax of a parent block and blocks adjacent on the right and left sides of the parent block as reference values of the parallax candidate 43a. However, the candidate calculation unit 106 may narrow down the number of reference values of the parallax candidate 43a to one, and set a predetermined range from one reference value as the parallax candidate 43a. In this case, the candidate calculation unit 106 calculates dissimilarity for each reference value of the parallax candidate 43a, and employs most probable parallax, that is, a reference value having lowest dissimilarity.

For example, assume that, when a certain second block in the left image 21 is defined as a block X, parallaxes of a parent block of the block X and blocks adjacent to the parent block on the right and left are 50, 100, and 400 pixels. In this case, the candidate calculation unit 106 calculates dissimilarity between the block X and regions of the right image 31 having dissimilarities of 50, 100, and 400 pixels with respect to the block X, and sets parallax of a region having smallest dissimilarity as a reference value of parallax. A predetermined range from the reference value, for example, plus or minus 20 pixels is set as the parallax candidate 43a.

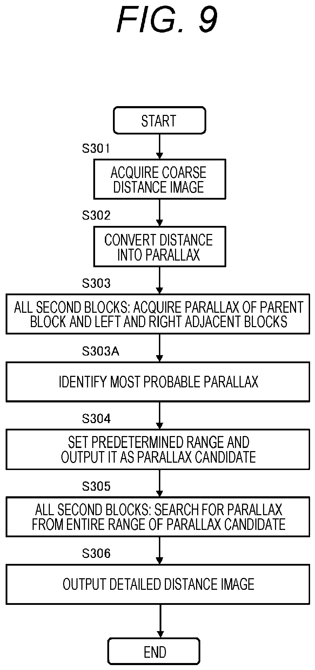

FIG. 9 is a flowchart showing operation of the arithmetic device 1 in the present modification. The present flowchart is different from FIG. 7 in the first embodiment in that Step S303A is added. In Step S303A, the candidate calculation unit 106 identifies most probable parallax, that is, a reference value having lowest dissimilarity among the parallaxes acquired in Step S303. In subsequent Step S304, a predetermined range from the parallax identified in Step S303A is output as a parallax candidate 43a. Since the processing in Step S305 and subsequent steps is similar to that of the first embodiment, description the processing will be omitted.

According to the modification 3, an action and an effect described below can be obtained.

(6) The candidate calculation unit 106 determines the parallax candidate 43a by selecting any one of parallaxes set for the parent block and the adjacent block in the coarse distance image 41 and using the selected parallax. For this reason, the calculation amount can be reduced.

### (Modification 4)

In the first embodiment described above, the search condition of the candidate calculation unit 106 is "a parent block and a block adjacent to the parent block in the horizontal direction". However, the search condition is not limited to this.

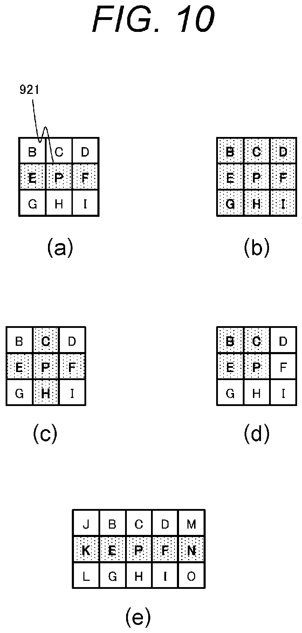

FIG. 10 is a diagram illustrating a variation of the search condition. FIG. 10(a) is a diagram illustrating the search condition in the first embodiment, and FIGS. 10(b) to 10(e) are diagrams illustrating the search condition exemplified in the present modification. Each alphabet in FIG. 10 is a name given to the first block in the coarse distance image 41 for convenience. Among the alphabets illustrated in FIG. 10, "P" indicates a parent block, and the other alphabets have no special meaning.

As illustrated in FIG. 10(a), in the first embodiment, parallaxes of a parent block and blocks adjacent to the parent block in the horizontal direction, that is, blocks E, P, and F are used as reference values of a candidate. However, the search conditions may be changed as illustrated in FIGS. 10(b) to 10(e). The search condition in the example illustrated in FIG. 10(b) is all nine blocks around a parent block. In this case, parallaxes of the block P and blocks B to I are reference values of a candidate.

The search condition in FIG. 10 (c) is a parent block and upper, lower, left, and right of the parent block. In this case, parallaxes of the blocks P, C, E, F, and H are reference values of a candidate. The search condition in FIG. 10 (d) is a parent block, upper left of the parent block, left of the parent block, and upper of the parent block. In this case, parallaxes of the blocks P, B, C, and E are reference values of a candidate. The search condition in FIG. 10 (e) is a parent block and two blocks on the left and right. In this case, parallaxes of the blocks P, K, E, F, and N are reference values of a candidate. According to the modification 4, various search conditions can be set.

### (Modification 5)

The candidate calculation unit 106 and the first parallax search unit 103A may create a more detailed distance image using the detailed distance image 46. In other words, the arithmetic device 1 may apply the processing of creating the detailed distance image 46 from the coarse distance image 41 in the first embodiment to creation of a more detailed distance image from the detailed distance image 46. Furthermore, the arithmetic device 1 may repeatedly execute this processing to gradually improve the resolution of a distance image and finally calculate a distance for each pixel.

In the present modification, a third block having a size equal to or smaller than the second block is defined, and after the first parallax search unit 103A creates the detailed distance image 46, the candidate calculation unit 106 creates a parallax candidate using the detailed distance image 46 for each of the third blocks in the standard image. Then, the first parallax search unit 103A creates a more detailed distance image for each of the third blocks based on the parallax candidate created by the candidate calculation unit 106 using the detailed distance image 46. According to the modification 5, a more detailed distance image can be created.

### (Modification 6)

The candidate calculation unit 106 sets a predetermined range determined in advance from the acquired reference value of the parallax candidate 43a as the parallax candidate 43a. For example, in the first embodiment described above, the predetermined range is described as plus or minus 20 pixels. However, the candidate calculation unit 106 may make this range variable according to the distance. This is because a change amount tends to be small in a case where a distance to a subject is long and a parallax is small, and the change amount tends to be large in a case where the distance to the subject is short and the parallax is large.

For example, the candidate calculation unit 106 may determine this range according to degree of distance of the parent block. In this case, the candidate calculation unit 106 sets the range to be wider as the distance of the parent block is shorter, and sets the range to be smaller as the distance of the parent block is shorter. As another example, the candidate calculation unit 106 may determine this range according to the magnitude of a value of a parallax serving as the reference. In this case, the larger the reference value of the parallax candidate 43a is, the wider the range is set, and the smaller the reference value of a candidate of a parallax is, the smaller the range is set.

### (Modification 7)

In the first embodiment described above, the first parallax search unit 103A matches the region for which dissimilarity is calculated with the region for which a parallax is set. However, the first parallax search unit 103A may set the region where a parallax is set smaller than the region where dissimilarity is calculated. By performing the calculation of dissimilarity, that is, the search for a corresponding position in a wide region, and a parallax in a small range, there is an advantage of less influence of noise.

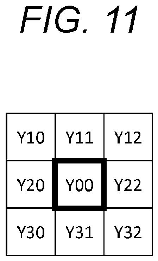

FIG. 11 is a diagram for explaining operation of the first parallax search unit 103A in a modification 7. An inner square illustrated in FIG. 11 is a region for which a parallax is set, and an outer square is a region for which dissimilarity is calculated. In FIG. 11, the region for which dissimilarity is calculated has an area nine times as large as the region for which a parallax is set. However, this ratio of the regions is optional. Further, a ratio in the vertical direction in the drawing and a ratio in the lateral direction in the drawing are also optional. For example, the region for which dissimilarity is calculated may have a length four times in the lateral direction in the diagram and 1.5 times in the vertical direction in the drawing as large as that of the region for which a parallax is set.

### (Modification 8 according to the claimed invention)

In the first embodiment described above, the candidate calculation unit 106 uses a parallax of a parent block of the second block of the processing target and parallaxes of blocks adjacent to the right and left of the parent block as the reference values of the parallax candidate 43a. However, in a predetermined case, the configuration may be such that only a parallax of the parent block is used as the reference value of the parallax candidate 43a. The predetermined case is, for example, a case where a difference between a value of a parallax of a parent block and parallaxes of blocks adjacent to the left and right of the parent block is equal to or less than a predetermined value. Another predetermined case is a case where a value of a parallax of a parent block is extremely large or extremely small.

Further, in a case where the arithmetic device 1 can acquire information on the speed of the vehicle 9 from a speed sensor mounted on the vehicle 9, two modifications described below can also be employed. In a case where the speed of the vehicle 9 is higher than a predetermined threshold and a value of a parallax of a parent block is larger than a predetermined threshold, the configuration is such that only the parallax of the parent block is used as the reference value of the parallax candidate 43a. Further, in a case where the speed of the vehicle 9 is lower than a predetermined threshold and a value of a parallax of a parent block is smaller than a predetermined threshold, the configuration is such that only the parallax of the parent block is used as the reference value of the parallax candidate 43a. In these two modifications, since information on a close distance in a case where the vehicle speed is high and information on a far distance in a case where the vehicle speed is low are less important, reduction for calculation is more emphasized than improvement in accuracy.

Furthermore, in the present modification, the first parallax search unit 103A may add additional information indicating a processing progress for each of the second blocks to the detailed distance image 46 and output the detailed distance image 46. Specifically, the additional information is information indicating, for each of the second blocks, whether the reference value of a parallax is only a parallax of a parent block or a parallax of the parent block and blocks adjacent to the parent block on the left and right sides. The additional information may be created by the first parallax search unit 103A or may be created by the candidate calculation unit 106.

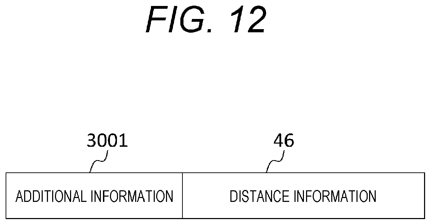

FIG. 12 is a conceptual diagram illustrating an output of the first parallax search unit 103A. A reference numeral 3001 illustrated in FIG. 12 represents the additional information. As illustrated in FIG. 12, the additional information 3001 may be added to the head of the detailed distance image 46, or contrary to FIG. 12, the additional information 3001 may be added to the tail of the detailed distance image 46. Further, the additional information 3001 and the information of the detailed distance image 46 may be described, for example, block by block alternately.

According to the modification 8, an action and an effect described below can be obtained.

(7) The arithmetic device 1, the left camera 2, and the right camera 3 are mounted on the vehicle 9. Based on a speed of the vehicle 9 and a parallax of a parent block, the candidate calculation unit 106 determines whether to determine the parallax candidate 43a using only the parallax of the parent block. For this reason, unnecessary calculation can be reduced.

### (Modification 9)

In a case where a specific condition is satisfied, the configuration may be such that the first parallax search unit 103A does not perform the search, and uses a value of a parallax of a parent block as a parallax of a child block as it is. In the present modification, in a predetermined case described below, the candidate calculation unit 106 outputs, for each of the second blocks, a special signal indicating that no search is necessary and a parallax of a parent block to the first parallax search unit 103A, and the first parallax search unit 103A that receives the special signal sets the parallax of the parent block as a parallax of a child block.

The candidate calculation unit 106 may output the special signal described above and a value of a parallax of a parent block in a case where a difference between the value of the parallax of the parent block and parallaxes of blocks adjacent to the left and right of the parent block is equal to or less than a predetermined value. Further, in a case where a value of a parallax of a parent block is extremely large or extremely small, the candidate calculation unit 106 may output the special signal described above and the value of the parallax of the parent block.

Further, in a case where the arithmetic device 1 can acquire information on the speed of the vehicle 9 from a speed sensor mounted on the vehicle 9, two modifications described below can also be employed. In a case where the speed of the vehicle 9 is higher than a predetermined threshold and a value of a parallax of a parent block is larger than a predetermined threshold, the candidate calculation unit 106 may output the special signal described above and the value of the parallax of the parent block. Further, in a case where the speed of the vehicle 9 is lower than a predetermined threshold and a value of a parallax of a parent block is smaller than a predetermined threshold, the candidate calculation unit 106 may output the special signal described above and the value of the parallax of the parent block. In these two modifications, since information on a close distance in a case where the vehicle speed is high and information on a far distance in a case where the vehicle speed is low are less important, reduction for calculation is more emphasized than improvement in accuracy.

Furthermore, in the present modification, the first parallax search unit 103A may add additional information indicating a processing progress for each of the second blocks to the detailed distance image 46 and output the detailed distance image 46. Specifically, the additional information is information indicating whether a parallax is determined by performing a search for each of the second block or whether a parallax of a parent block is used as it is. The additional information may be created by the first parallax search unit 103A or may be created by the candidate calculation unit 106.

### (Modification 10)

In the first embodiment described above, a timing of outputting the detailed distance image 46 is not particularly specified. However, as described below, the output may be performed at any one of first to fourth timings. The first timing is a timing at which the entire detailed distance image 46 is created. In the case of outputting at the first timing, the entire detailed distance image 46 is output at a time. The second timing is a timing at which one line in the lateral direction in the drawing of the detailed distance image 46 is created. In the case of outputting at the second timing, every time one line of the detailed distance image 46 is created, information of the one line is output.

The third timing is a timing at which distance information of a predetermined number of pixels of four or more pixels continuous in the lateral direction in the drawing is created. In the case of outputting at the third timing, every time distance information of a predetermined number of pixels of the detailed distance image 46 is created, the information of the predetermined number of pixels is output. The fourth timing is a timing at which distance information of three pixels continuous in the lateral direction in the drawing is created. In the case of outputting at the fourth timing, every time the distance information of three pixels of the detailed distance image 46 is created, the information of the three pixels is output.

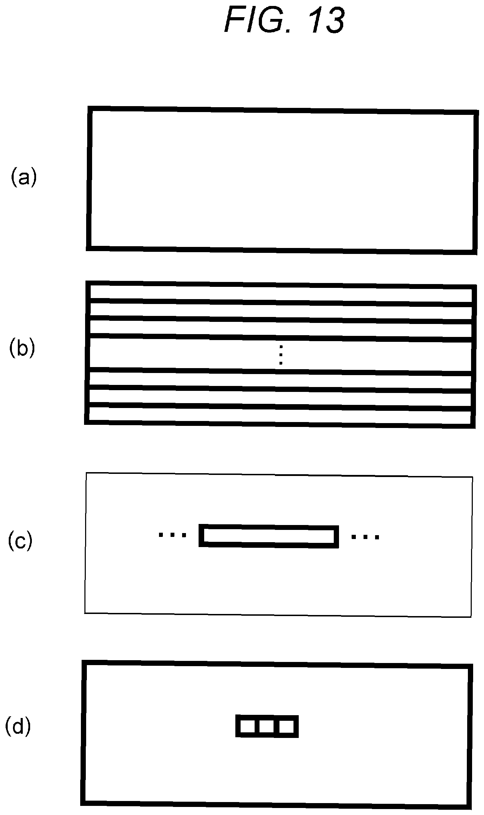

FIG. 13 is a conceptual diagram illustrating a timing of outputting the detailed distance image 46 in a modification 10. FIGS. 13 (a) to 13 (d) correspond to the first to fourth timings described above, respectively.

### (Modification 11)

In the first embodiment described above, a value of a parallax itself is included in the detailed distance image 46 output by the first parallax search unit 103A. However, the first parallax search unit 103A may convert a parallax included in the detailed distance image 46 into a distance using the parallax table 121 and output the detailed distance image 46. In this case, the first parallax search unit 103A may further perform what is called normalization processing, in which values of all the pixels are multiplied by an optimum coefficient, so that the value of each pixel falls within a predetermined range, for example, 0 to 255.

### (Modification 12)

In the first embodiment, a functional configuration of the arithmetic device 1 described above is merely an example. Some functional configurations illustrated in FIG. 2 may be integrally configured, or a configuration illustrated in one functional block diagram in FIG. 3 may be divided into two or more functions. Further, a part of a function of each functional block may be included in another functional block. For example, the configuration may be such that the parallax candidate 43a includes only a reference value, and the first parallax search unit 103A sets a predetermined range around the reference value as a search range. For example, in the present modification, the parallax candidate 43a is "50, 100, and 400 pixels", and when the parallax candidate 43a is input, the first parallax search unit 103A searches "30 to 70, 80 to 120, and 380 to 420 pixels".

### - Second Embodiment not corresponding to the claimed invention -

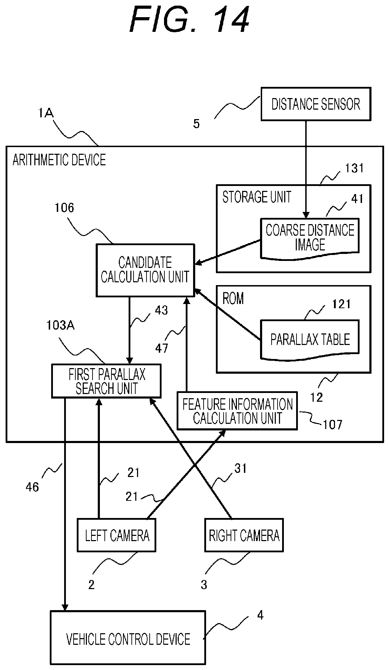

A second embodiment of the arithmetic device according to the present invention will be described with reference to FIGS. 14 to 15. In description below, the same constituents as those of the first embodiment are denoted by the same reference numerals, and differences will be mainly described. Points not specifically described are the same as those in the first embodiment. The present embodiment is different from the first embodiment mainly in that an edge is detected from a captured image and a search range is changed using the edge. Since the hardware configuration of an arithmetic device 1A and the hardware configuration of the vehicle 9 on which the arithmetic device 1A is mounted in the present embodiment are similar to those in the first embodiment, description of these will be omitted.

### (Functional block)

FIG. 14 is a functional block diagram illustrating a function of the arithmetic device 1A according to the second embodiment as a functional block. A difference from the first embodiment is that the arithmetic device 1A further includes a feature information calculation unit 107. Operation of the first parallax search unit 103A is similar to that of the first embodiment. Operation of the candidate calculation unit 106 is partially different from that of the first embodiment as described later.

The left image 21 is input to the feature information calculation unit 107. The feature information calculation unit 107 detects an edge from the left image 21, calculates feature information 47, and outputs the feature information 47 to the candidate calculation unit 106. Various known methods can be used to detect an edge, and an edge is detected by, for example, a Sobel filter or a Gaussian filter. The feature information calculation unit 107 outputs a position of the detected edge to the candidate calculation unit 106 as the feature information 47.

The candidate calculation unit 106 changes the processing as described below depending on whether or not a parent block of the second block of the processing target is on the edge. When a parent block of the second block of the processing target is present on the edge, the candidate calculation unit 106 acquires parallaxes of the parent block and blocks adjacent to the left and right sides of the parent block as in the first embodiment. In contrast, in a case where a parent block of the second block of the processing target is not on the edge, the candidate calculation unit 106 acquires only a parallax of the parent block. In a case where a parent block is not on the edge, it is considered that there is no abrupt change in distance in a region of the parent block. Accordingly, only a parallax of the parent block is set as the reference value of the parallax candidate 43a in order to reduce the processing.

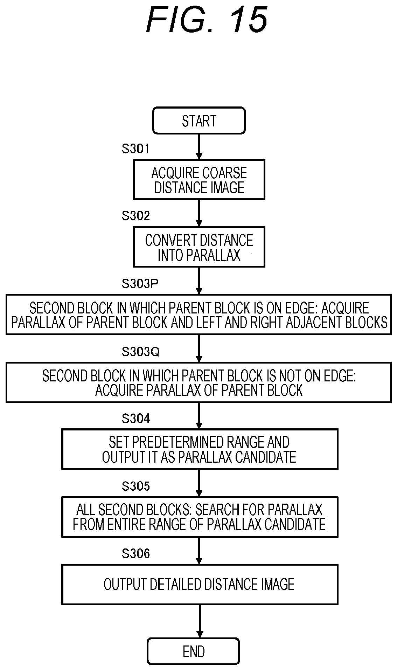

FIG. 15 is a flowchart showing processing of the arithmetic device 1A in the second embodiment. A difference from the first embodiment is that Step S303P and Step S303Q are included instead of Step S303. Since processing of steps S301 and S302 is similar to that of the first embodiment, the description of the processing will be omitted. In Step S303P, the candidate calculation unit 106 acquires a parallax of a parent block and blocks adjacent on the right and left sides of the parent block for the second block having the parent block on the edge. In Step S303Q, the candidate calculation unit 106 acquires a parallax of a parent block for the second block having no parent block on the edge.

To be sure, when Step S303P and Step S303Q are combined, the candidate calculation unit 106 acquires some parallax for all the second blocks in the standard image. The parallax acquired in Steps S303P and S303Q is used as a reference value of the parallax candidate 43a. Since processing in Step S304 and subsequent steps is similar to that of the first embodiment, description of the processing will be omitted.

According to the second embodiment described above, an action and an effect below can be obtained.
(8) The arithmetic device 1A includes the feature information calculation unit 107 that calculates the feature information 47 from the left image 21. Based on the feature information 47 calculated by the feature information calculation unit 107, the candidate calculation unit 106 determines whether or not to determine the parallax candidate 43a using only a parallax of a parent block. For this reason, the calculation can be reduced using a characteristic of a captured image.
(9) The feature information 47 is edge information of an image. In a case where a region of a parent block overlaps an edge calculated by the feature information calculation unit, the candidate calculation unit 106 determines the parallax candidate 43a using a parallax of the parent block and an adjacent block, and in a case where a region of a parent block does not overlap the edge calculated by the feature information calculation unit, the candidate calculation unit 106 determines the parallax candidate 43a using only a parallax of the parent block. For this reason, distance accuracy in the vicinity of a boundary of an edge can be improved.

### (Modification 1 of second embodiment)

In the second embodiment described above, an edge is used as feature information in an image. However, noise may be used as the feature information instead of an edge. The feature information calculation unit 107 may evaluate a noise level for each fine region of the left image 21 and output the magnitude of the noise level for each region to the candidate calculation unit 106 as the feature information 47. A known method can be used to evaluate noise, and, for example, noise can be evaluated using root mean square (RMS) granularity or a Wiener spectrum.

The candidate calculation unit 106 handles that a noise level of a region where a parent block is present is lower than a predetermined threshold in the same manner as that the parent block is present on an edge, and handles that a noise level in a region where a parent block is present is equal to or higher than the predetermined threshold in the same manner as that a parent block is not present on the edge. Note that the feature information calculation unit 107 may execute both evaluation of noise and detection of an edge, and output both pieces of information as the feature information 47. In that case, the candidate calculation unit 106 makes determination using information of both noise and an edge.

According to the present modification, an action and an effect described below can be obtained.

(10) The feature information 47 is noise information of an image. In a case where a noise level in a region of a parent block is lower than a predetermined threshold, the candidate calculation unit 106 determines the parallax candidate 43a using a parallax of the parent block and an adjacent block, and in a case where a noise level in a region of a parent block is equal to or higher than the predetermined threshold, the candidate calculation unit 106 determines the parallax candidate 43a using only a parallax of a parent block. For this reason, it is possible to reduce a calculation amount of a region where improvement in distance accuracy cannot be expected even if a reference amount is increased due to a large amount of noise.

### (Modification 2 of second embodiment)

In the second embodiment, the arithmetic device 1A may include a second parallax search unit that generates the coarse distance image 41. In this case, the vehicle 9 does not need to include the distance sensor 5. Note that the present modification clearly indicates that the configuration of the second embodiment and the modification 1 of the first embodiment may be combined.

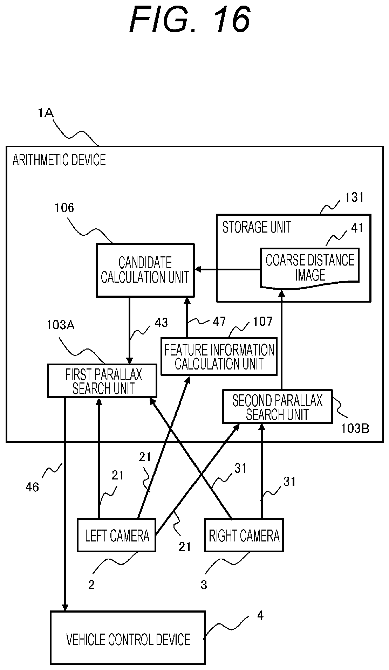

FIG. 16 is a functional block diagram of the arithmetic device 1 in a modification 2 of the second embodiment. In the functional block diagram shown in FIG. 16, the second parallax search unit 103B is added as compared with FIG. 14. Operation of the first parallax search unit 103A is similar to that of the first embodiment. The candidate calculation unit 106 does not need to perform the first processing of converting a distance into a parallax. The left image 21 and the right image 31 are input to the second parallax search unit 103B. The second parallax search unit 103B generates the coarse distance image 41 and stores the coarse distance image 41 in the storage unit 131. Since subsequent processing is described in the modification 1 of the first embodiment and the second embodiment, the description of the processing will be omitted.

In each of the above-described embodiments and modifications, the program is stored in the ROM (not illustrated). However, the program may be stored in a non-volatile storage device (not illustrated). Further, the arithmetic device may include an input/output interface (not illustrated), and the program may be read from another device via the input/output interface and a medium that can be used by the arithmetic device when necessary. Here, the medium refers to, for example, a storage medium detachable from the input/output interface, or a communication medium, that is, a wired, wireless, or optical network, or a carrier wave or a digital signal propagating through the network. Further, some or all of the functions implemented by the program may be implemented by a hardware circuit or an FPGA.

The above-described embodiments and modifications may be combined. Although various embodiments and modifications are described above, the present invention is not limited to the content of these embodiments and modifications. Other modes considered within the scope of the technical idea of the present invention are also included in the scope of the present invention, insofar as they fall under the scope of the claims.

### Reference Signs List

1, 1A arithmetic device
2 left camera
3 right camera
4 vehicle control device
5 distance sensor
9 vehicle
14 interface
21 left image
31 right image
41 coarse distance image
43 parallax candidate a
43 all-region parallax candidate
46 detailed distance image
47 feature information
103A first parallax search unit
103B second parallax search unit
106 candidate calculation unit
107 feature information calculation unit
121 parallax table
131 storage unit

## Claims

1. An arithmetic device comprising:
a storage unit (131) that stores a coarse distance image (41) indicating a parallax in units of first blocks;
a first parallax search unit (103A) that uses a standard image that is an image captured by a first camera and a reference image that is an image captured by a second camera to calculate, in units of second blocks having a size equal to or smaller than that of the first block, a parallax in the standard image based on a parallax candidate (43) that is a candidate for a parallax for each of the second blocks, and generate a detailed distance image (46) that is a distance image in detail; and
a candidate calculation unit (106) that calculates the parallax candidate (43) based on a parallax of a parent block that is a region having a size of the first block including the second block for which the first parallax search unit (103A) calculates a parallax, a parallax of an adjacent block that is a region having the size of the first block adj acent to the parent block, and a search condition, wherein the search condition is a parent block and a block adjacent to the parent block in a horizontal direction, wherein the parallax candidate (43) is based on the parallax of the parent block and the parallax of the adjacent block in the coarse distance image (41),
wherein:
the arithmetic device, the first camera, and the second camera are mounted on a vehicle (9), and
the candidate calculation unit (106) determines, based on a speed of the vehicle (9) and a parallax of the parent block, whether to determine the parallax candidate (43) using only a parallax of the parent block or to determine the parallax candidate (43) using a parallax of the parent block and the adjacent block,
wherein:
in a case where the speed of the vehicle (9) is higher than a predetermined threshold and a value of a parallax of a parent block is larger than a predetermined threshold, the candidate calculation unit (106) determines the parallax candidate (43) using only a parallax of the parent block; and
in a case where the speed of the vehicle (9) is lower than a predetermined threshold and a value of a parallax of a parent block is smaller than a predetermined threshold, the candidate calculation unit (106) determines the parallax candidate (43) using only a parallax of the parent block.

2. The arithmetic device according to claim 1, further comprising a second parallax search unit (103B) that creates the coarse distance image (41) using the standard image and the reference image and stores the coarse distance image (41) in the storage unit (131).

3. The arithmetic device according to claim 1, further comprising an interface (14) that receives the coarse distance image (41) and stores the coarse distance image (41) in the storage unit (131).

4. The arithmetic device according to claim 1, wherein the candidate calculation unit (106) searches for the parallax candidate (43) by selecting any one of parallaxes set for the parent block and the adjacent block in the coarse distance image (41), and using the selected parallax.

5. The arithmetic device according to claim 1, wherein
both the standard image and the reference image are images obtained by capturing a three-dimensional space spreading in a vertical direction and the horizontal direction, and
the candidate calculation unit (106) sets the first block existing in the horizontal direction of the parent block in the three-dimensional space as the adjacent block.

6. A parallax calculation method executed by an arithmetic device (1, 1A) including a storage unit (131) that stores a coarse distance image (41) indicating a parallax in units of first blocks, the parallax calculation method comprising:
using a standard image that is an image captured by a first camera and a reference image that is an image captured by a second camera to calculate, in units of second blocks having a size equal to or smaller than that of the first block, a parallax in the standard image based on a parallax candidate (43) that is a candidate for a parallax for each of the second blocks, and generate a detailed distance image (46) that is a distance image in detail; and
calculating the parallax candidate (43) based on a parallax of a parent block that is a region having a size of the first block including the second block for which a parallax is calculated, a parallax of an adjacent block that is a region having the size of the first block adjacent to the parent block, and a search condition, wherein the search condition is a parent block and a block adjacent to the parent block in a horizontal direction, wherein the parallax candidate (43) is based on the parallax of the parent block and the parallax of the adjacent block in the coarse distance image (41),
wherein:
the arithmetic device, the first camera, and the second camera are mounted on a vehicle (9), and the parallax calculation method further comprises:
determining, based on a speed of the vehicle (9) and a parallax of the parent block, whether to determine the parallax candidate (43) using only a parallax of the parent block or to determine the parallax candidate (43) using a parallax of the parent block and the adjacent block,
wherein the parallax calculation method further comprises:
in a case where the speed of the vehicle (9) is higher than a predetermined threshold and a value of a parallax of a parent block is larger than a predetermined threshold, determining the parallax candidate (43) using only a parallax of the parent block; and
in a case where the speed of the vehicle (9) is lower than a predetermined threshold and a value of a parallax of a parent block is smaller than a predetermined threshold, determining the parallax candidate (43) using only a parallax of the parent block.

## Patentansprüche

1. Arithmetische Vorrichtung, die Folgendes umfasst:
eine Speichereinheit (131), die ein grobes Entfernungsbild (41) speichert, das eine Parallaxe in Einheiten von ersten Blöcken anzeigt;
eine erste Parallaxen-Sucheinheit (103A), die ein Standardbild, d. h. ein Bild, das durch eine erste Kamera erfasst wird, und ein Referenzbild, d. h. ein Bild, das durch eine zweite Kamera erfasst wird, verwendet, um in Einheiten von zweiten Blöcken, die eine Größe aufweisen, die kleiner oder gleich jener des ersten Blocks ist, basierend auf einem Parallaxenkandidaten (43), d. h. einem Kandidaten für eine Parallaxe für jeden der zweiten Blöcke, eine Parallaxe in dem Standardbild zu berechnen und ein detailliertes Entfernungsbild (46), d. h. ein Entfernungsbild mit Einzelheiten, zu erzeugen; und
eine Kandidatenberechnungseinheit (106), die den Parallaxenkandidaten (43) basierend auf einer Parallaxe eines Elternblocks, d. h. eines Bereichs, der eine Größe des ersten Blocks aufweist, der den zweiten Block enthält, für den die erste Parallaxen-Sucheinheit (103A) eine Parallaxe berechnet, eine Parallaxe eines benachbarten Blocks, d. h. eines Bereichs, der eine Größe des ersten Blocks neben dem Elternblock aufweist, und eine Suchbedingung berechnet, wobei die Suchbedingung ein Elternblock und ein Block neben dem Elternblock in einer horizontalen Richtung ist, wobei der Parallaxenkandidat (43) auf der Parallaxe des Elternblocks und der Parallaxe des benachbarten Blocks in dem groben Entfernungsbild (41) basiert,
wobei:
die arithmetische Vorrichtung, die erste Kamera und die zweite Kamera in einem Fahrzeug (9) montiert sind, und
die Kandidatenberechnungseinheit (106) basierend auf einer Geschwindigkeit des Fahrzeugs (9) und einer Parallaxe des Elternblocks bestimmt, ob der Parallaxenkandidat (43) nur unter Verwendung einer Parallaxe des Elternblocks bestimmt werden soll oder der Parallaxenkandidat (43) unter Verwendung einer Parallaxe des Elternblocks und des benachbarten Blocks bestimmt werden soll,
wobei:
dann, wenn die Geschwindigkeit des Fahrzeugs (9) höher ist als ein vorgegebener Schwellenwert und ein Wert einer Parallaxe eines Elternblocks größer ist als ein vorgegebener Schwellenwert, die Kandidatenberechnungseinheit (106) den Parallaxenkandidaten nur unter Verwendung einer Parallaxe des Elternblocks bestimmt; und
dann, wenn die Geschwindigkeit des Fahrzeugs (9) niedriger ist als ein vorgegebener Schwellenwert und ein Wert einer Parallaxe eines Elternblocks kleiner ist als ein vorgegebener Schwellenwert, die Kandidatenberechnungseinheit (106) den Parallaxenkandidaten (43) nur unter Verwendung einer Parallaxe des Elternblocks bestimmt.

2. Arithmetische Vorrichtung nach Anspruch 1, die ferner eine zweite Parallaxensucheinheit (103B) umfasst, die das grobe Entfernungsbild (41) unter Verwendung des Standardbilds und des Referenzbilds erzeugt und das grobe Entfernungsbild (41) in der Speichereinheit (131) speichert.

3. Arithmetische Vorrichtung nach Anspruch 1, die ferner eine Schnittstelle (14) umfasst, die das grobe Entfernungsbild (41) empfängt und das grobe Entfernungsbild (41) in der Speichereinheit (131) speichert.

4. Arithmetische Vorrichtung nach Anspruch 1, wobei die Kandidatenberechnungseinheit (106) den Parallaxenkandidaten (43) durch Auswählen einer der Parallaxen, die für den Elternblock und den benachbarten Block in dem groben Entfernungsbild (41) eingestellt sind, und durch Verwenden der ausgewählten Parallaxe sucht.

5. Arithmetische Vorrichtung nach Anspruch 1, wobei
sowohl das Standardbild als auch das Referenzbild Bilder sind, die durch Erfassen eines dreidimensionalen Raums, der sich in einer vertikalen Richtung und der horizontalen Richtung ausbreitet, erhalten werden, und
die Kandidatenberechnungseinheit (106) den ersten Block, der in der horizontalen Richtung des Elternblocks in dem dreidimensionalen Raum existiert, als den benachbarten Block einstellt.

6. Parallaxenberechnungsverfahren, das durch eine arithmetische Vorrichtung (1, 1A) ausgeführt wird, die eine Speichereinheit (131) enthält, die ein grobes Entfernungsbild (41) speichert, das eine Parallaxe in Einheiten von ersten Blöcken anzeigt, wobei das Parallaxenberechnungsverfahren Folgendes umfasst:
Verwenden eines Standardbildes, d. h. eines Bildes, das durch eine erste Kamera erfasst wird, und eines Referenzbildes, d. h. eines Bildes, das durch eine zweite Kamera erfasst wird, um in Einheiten von zweiten Blöcken, die eine Größe aufweisen, die kleiner oder gleich der des ersten Blocks ist, basierend auf einem Parallaxenkandidaten (43), d. h. einem Kandidaten für eine Parallaxe für jeden der zweiten Blöcke, eine Parallaxe in dem Standardbild zu berechnen, und ein detailliertes Entfernungsbild (46), d. h. ein Entfernungsbild mit Einzelheiten, zu erzeugen; und
Berechnen des Parallaxenkandidaten (43) basierend auf einer Parallaxe eines Elternblocks, d. h. eines Bereichs, der eine Größe des ersten Blocks aufweist, der den zweiten Block enthält, für den eine Parallaxe berechnet wird, einer Parallaxe eines benachbarten Blocks, d. h. eines Bereichs, der die Größe des ersten Blocks neben dem Elternblock aufweist, und einer Suchbedingung, wobei die Suchbedingung ein Elternblock und ein Block neben dem Elternblock in einer horizontalen Richtung ist, wobei der Parallaxenkandidat (43) auf der Parallaxe des Elternblocks und der Parallaxe des benachbarten Blocks in dem groben Entfernungsbild (41) basiert,
wobei:
die arithmetische Vorrichtung, die erste Kamera und die zweite Kamera in einem Fahrzeug (9) montiert sind und das Parallaxenberechnungsverfahren ferner Folgendes umfasst:
Bestimmen basierend auf einer Geschwindigkeit des Fahrzeugs (9) und einer Parallaxe des Elternblocks, ob der Parallaxenkandidat (43) nur unter Verwendung einer Parallaxe des Elternblocks bestimmt werden soll oder ob der Parallaxenkandidat (43) unter Verwendung einer Parallaxe des Elternblocks und des benachbarten Blocks bestimmt werden soll,
wobei das Parallaxenberechnungsverfahren ferner Folgendes umfasst:
dann, wenn die Geschwindigkeit des Fahrzeugs (9) höher ist als ein vorgegebener Schwellenwert und ein Wert einer Parallaxe eines Elternblocks größer ist als ein vorgegebener Schwellenwert, Bestimmen des Parallaxenkandidaten nur unter Verwendung einer Parallaxe des Elternblocks; und
dann, wenn die Geschwindigkeit des Fahrzeugs (9) niedriger ist als ein vorgegebener Schwellenwert und ein Wert einer Parallaxe eines Elternblocks kleiner ist als ein vorgegebener Schwellenwert, Bestimmen des Parallaxenkandidaten (43) nur unter Verwendung einer Parallaxe des Elternblocks.

## Revendications

1. Dispositif arithmétique, comprenant :
une unité de stockage (131) qui stocke une image de distance grossière (41) indiquant une parallaxe dans des unités de premiers blocs ;
une première unité de recherche de parallaxe (103A) qui utilise une image standard qui est une image capturée par une première caméra et une image de référence qui est une image capturée par une seconde caméra pour calculer, dans des unités de second blocs ayant une taille égale ou inférieure à celle du premier bloc, une parallaxe dans l'image standard sur la base d'une parallaxe candidate (43) qui est une candidate pour une parallaxe pour chacun des seconds blocs, et qui génère une image de distance détaillée (46) qui est une image de distance en détail ; et
une unité de calcul de candidate (106) qui calcule la parallaxe candidate (43) sur la base d'une parallaxe d'un bloc parent qui est une région ayant une taille du premier bloc incluant le second bloc pour lequel la première unité de recherche de parallaxe (103A) calcule une parallaxe, d'une parallaxe d'un bloc adjacent qui est une région ayant la taille du premier bloc adjacent au bloc parent, et d'une condition de recherche, la condition de recherche étant un bloc parent et un bloc adjacent au bloc parent dans une direction horizontale, la parallaxe candidate (43) étant sur la base de la parallaxe du bloc parent et de la parallaxe du bloc adjacent dans l'image de distance grossière (41),
dans lequel :
le dispositif arithmétique, la première caméra et la seconde caméra sont montés sur un véhicule (9), et
l'unité de calcul de candidate (106) détermine, sur la base d'une vitesse du véhicule (9) et d'une parallaxe du bloc parent, s'il faut déterminer la parallaxe candidate (43) en utilisant uniquement une parallaxe du bloc parent ou s'il faut déterminer la parallaxe candidate (43) en utilisant une parallaxe du bloc parent et du bloc adjacent,
dans lequel :
dans un cas où la vitesse du véhicule (9) est plus élevée qu'un seuil prédéterminé et où une valeur d'une parallaxe d'un bloc parent est supérieure à un seuil prédéterminé, l'unité de calcul de candidate (106) détermine la parallaxe candidate (43) en utilisant uniquement une parallaxe du bloc parent ; et
dans un cas où la vitesse du véhicule (9) est plus basse qu'un seuil prédéterminé et où une valeur d'une parallaxe d'un bloc parent est inférieure à un seuil prédéterminé, l'unité de calcul de candidate (106) détermine la parallaxe candidate (43) en utilisant uniquement une parallaxe du bloc parent.

2. Dispositif arithmétique selon la revendication 1, comprenant en outre une seconde unité de recherche de parallaxe (103B) qui crée l'image de distance grossière (41) en utilisant l'image standard et l'image de référence et qui stocke l'image de distance grossière (41) dans l'unité de stockage (131).

3. Dispositif arithmétique selon la revendication 1, comprenant en outre une interface (14) qui reçoit l'image de distance grossière (41) et qui stocke l'image de distance grossière (41) dans l'unité de stockage (131).

4. Dispositif arithmétique selon la revendication 1, dans lequel l'unité de calcul de candidate (106) recherche la parallaxe candidate (43) en sélectionnant l'une quelconque de parallaxes fixées pour le bloc parent et le bloc adjacent dans l'image de distance grossière (41), et en utilisant la parallaxe sélectionnée.

5. Dispositif arithmétique selon la revendication 1, dans lequel
à la fois l'image standard et l'image de référence sont des images obtenues en capturant un espace tridimensionnel s'étirant dans une direction verticale et dans la direction horizontale, et
l'unité de calcul de candidate (106) fixe le premier bloc existant dans la direction horizontale du bloc parent dans l'espace tridimensionnel comme étant le bloc adjacent.

6. Procédé de calcul de parallaxe exécuté par un dispositif arithmétique (1, 1A) incluant une unité de stockage (131) qui stocke une image de distance grossière (41) indiquant une parallaxe dans des unités de premiers blocs, le procédé de calcul de parallaxe comprenant les étapes consistant à :
utiliser une image standard qui est une image capturée par une première caméra et une image de référence qui est une image capturée par une seconde caméra pour calculer, dans des unités de seconds blocs ayant une taille égale ou inférieure à celle du premier bloc, une parallaxe dans l'image standard sur la base d'une parallaxe candidate (43) qui est une candidate pour une parallaxe pour chacun des seconds blocs, et qui génère une image de distance détaillée (46) qui est une image de distance en détail ; et
calculer la parallaxe candidate (43) sur la base d'une parallaxe d'un bloc parent qui est une région ayant une taille du premier bloc incluant le second bloc pour lequel une parallaxe est calculée, d'une parallaxe d'un bloc adjacent qui est une région ayant la taille du premier bloc adjacent au bloc parent, et d'une condition de recherche, la condition de recherche étant un bloc parent et un bloc adjacent au bloc parent dans une direction horizontale, la parallaxe candidate (43) étant sur la base de la parallaxe du bloc parent et de la parallaxe du bloc adjacent dans l'image de distance grossière (41),
dans lequel :
le dispositif arithmétique, la première caméra et la seconde caméra sont montés sur un véhicule (9), et le procédé de calcul de parallaxe comprend en outre l'étape consistant à :
déterminer, sur la base d'une vitesse du véhicule (9) et d'une parallaxe du bloc parent, s'il faut déterminer la parallaxe candidate (43) en utilisant une parallaxe du bloc parent et du bloc adjacent ou s'il faut déterminer la parallaxe candidate (43) en utilisant une parallaxe du bloc parent et du bloc adjacent,
dans lequel le procédé de calcul de parallaxe comprend en outre les étapes consistant à :
dans un cas où la vitesse du véhicule (9) est plus élevée qu'un seuil prédéterminé et où une valeur d'une parallaxe d'un bloc parent est supérieure à un seuil prédéterminé, déterminer la parallaxe candidate (43) en utilisant uniquement une parallaxe du bloc parent ; et
dans un cas où la vitesse du véhicule (9) est plus basse qu'un seuil prédéterminé et où une valeur d'une parallaxe d'un bloc parent est inférieure à un seuil prédéterminé, déterminer la parallaxe candidate (43) en utilisant uniquement une parallaxe du bloc parent.
